# EUROPEAN PATENT APPLICATION

(11) **EP 2 621 146 A1**
(43) Date of publication of application: **31.07.2013**
(21) Application number: 13153285.5
(22) Date of filing: 30.01.2013
(51) Int. Cl.: H04L 29/08, H04L 12/26

(54) **System and method for automatic prioritization of communication sessions**

(30) Priority: 30.01.2012 IL 21783512
(71) Applicant: Verint Systems Ltd., Herzelia Pituach 46733 (IL)
(72) Inventor: Zeitune, Jack Avraham, Kfar Saba (IL)
(74) Representative: Bibby, William Mark

(57) **Abstract**

The disclosed techniques apply automatic prioritization to communication sessions conducted by users of a communication network, and present the sessions to an operator in accordance with the priorities. Each session is assigned an initial priority depending on the user who conducts the session (referred to as "target user"). The priority is then adjusted in accordance with a set of rules defined for that target user, and possibly based on activities of the target user as analyzed using the reconstructed communication. The rules typically consider metadata of the session. The sessions are typically held in a queue and presented to an operator in accordance with their respective priorities.

## Description

### FIELD OF THE DISCLOSURE

The present disclosure relates generally to network communication analysis, and particularly to methods and systems for prioritization of communication sessions.

### BACKGROUND OF THE DISCLOSURE

Some communication analysis systems reconstruct network communication sessions and present the sessions to an operator. For example, U.S. Patent Application Publication 2011/0238723, which is assigned to the assignee of the present patent application and whose disclosure is incorporated herein by reference, describes systems and methods for Web decoding. Web sessions of target users are reconstructed by accepting communication packets exchanged over a network during at least one network session associated with a target user. The packets are processed so as to identify Web pages viewed by the target user during the network session and interactions between the target user and the viewed Web pages. The network session is reconstructed as viewed by the target user over time, based on the identified Web pages and interactions. The reconstructed network session is presented to an operator. The interactions may be identified by a pattern of one or more packets that matches a given interaction selected from a set of possible interactions that are available in a given viewed Web page.

### SUMMARY OF THE DISCLOSURE

An embodiment that is described herein provides a method for communication analysis. The method includes receiving communication traffic from a communication network, and processing the received communication traffic so as to reconstruct communication sessions conducted by users of the communication network. Respective priorities are assigned automatically to the reconstructed communication sessions. The communication sessions are presented to an operator in accordance with the priorities.

In some embodiments, assigning the priorities includes assigning a priority to a communication session by identifying a target user who conducts the communication session and assigning the priority in accordance with one or more rules defined for the target user. In an embodiment, assigning the priority includes assigning a respective initial priority to the communication session depending on the target user, and adjusting the initial priority in accordance with the one or more rules.

In various embodiments, assigning the priority may include setting the priority depending on one or more Uniform Resource Locators (URLs) accessed during the communication session, depending on whether the communication session includes malicious content, depending on whether the communication session includes spam, and/or depending on a type of the communication session.

Additionally or alternatively, assigning the priority may include setting the priority depending on one or more parameters relating to the target user that are obtained from an external source other than the communication session, depending on whether content of a specified type is included in the communication session, and/or depending on whether a file of a specified type is attached to the communication session. Further additionally or alternatively, assigning the priority may include setting the priority depending on a type of application used in the communication session, and/or depending on an identity of another user involved in the communication session.

In an embodiment, processing the received communication traffic includes associating a communication session with respective metadata, and assigning the priorities includes setting a priority of the communication session depending on the metadata associated with the communication session. In another embodiment, the method includes modifying the priorities in response to input from the operator.

There is additionally provided, in accordance with an embodiment of the present invention, a communication analysis apparatus including a network interface and one or more processors. The network interface is configured to receive communication traffic from a communication network. The processors are configured to process the received communication traffic so as to reconstruct communication sessions conducted by users of the communication network, to automatically assign respective priorities to the reconstructed communication sessions and to present the communication sessions to an operator in accordance with the priorities.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a communication analysis system, in accordance with an embodiment that is described herein; and
Fig. 2 is a flow chart that schematically illustrates a method for communication analysis, in accordance with an embodiment that is described herein.

### DETAILED DESCRIPTION OF EMBODIMENTS

### OVERVIEW

Communication analysis systems typically collect and analyze large volumes of communication traffic, such as Internet sessions and phone conversations. Systems of this sort may be used, for example, by various intelligence and law enforcement agencies for investigation and tracking purposes. In many cases, however, the large traffic volume makes it unfeasible for a human operator to review all the collected traffic and decide which data items are of importance.

Embodiments that are described herein provide improved methods and systems for communication analysis. The disclosed techniques apply automatic prioritization to communication sessions conducted by users of a communication network, and present the sessions to an operator in accordance with the priorities.

In some embodiments, each session is assigned an initial priority depending on the user who conducts the session (referred to as "target user"). The priority is then adjusted in accordance with a set of rules defined for that target user, and possibly based on activities of the target user as analyzed using the reconstructed communication. The rules typically consider metadata of the session - Examples of possible rules are described hereinbelow. The sessions are typically held in a queue and presented to an operator in accordance with their respective priorities. In some embodiments, the operator can intervene in the queue and provide manual input that modifies the automatic prioritization.

The methods and systems described herein enable the operator to review communication sessions in order of importance, rather than in order of arrival. The prioritization rules described herein are highly effective in identifying important and meaningful communication sessions that are worthy of further analysis. As such, the disclosed techniques can increase the amount of traffic that can be analyzed, the quality of analysis and the efficiency of allocating analysis resources, and reduce the loss of significant information.

### SYSTEM DESCRIPTION

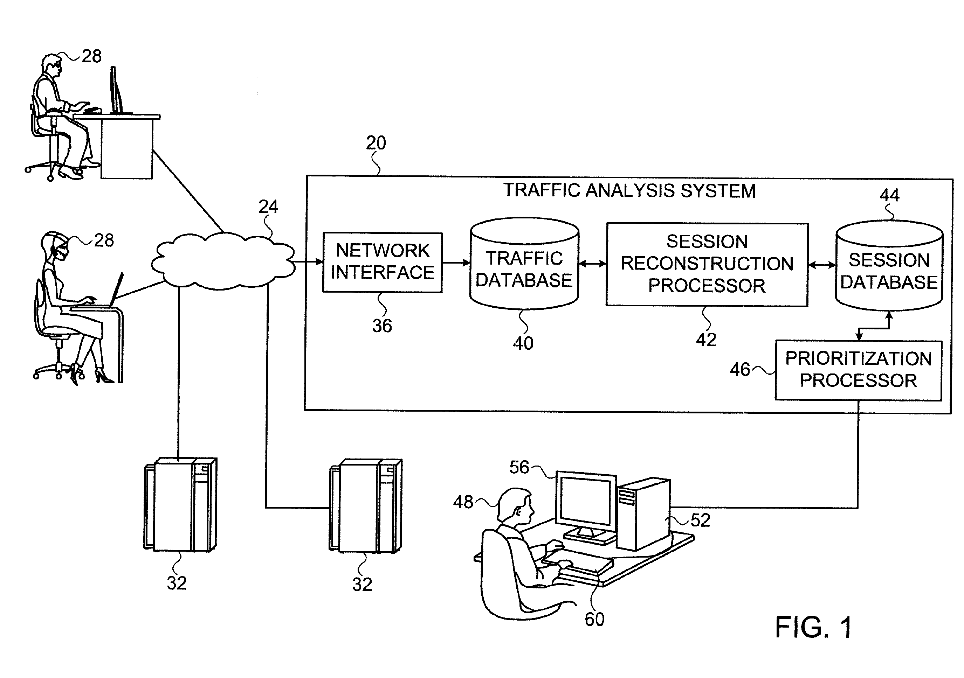

Fig. 1 is a block diagram that schematically illustrates a communication analysis system 20, in accordance with an embodiment that is described herein. System 20 accepts communication traffic from a communication network 24, in which users 28 conduct communication sessions. Systems such as system 20 can be used, for example, for Lawful Interception (LI) by law enforcement agencies, for intelligence gathering by various government agencies, or for any other suitable purpose.

System 20 processes the received communication traffic so as to reconstruct communication sessions conducted by users 28 in the network. The system assigns respective priorities to the reconstructed sessions using methods that are described in detail herein, and presents the reconstructed sessions to an operator 48 in accordance with the priorities.

System 20 may collect traffic from various types of communication networks. In the example of Fig. 1, network 24 comprises the Internet. Alternatively, however, network 24 may comprise any other suitable wireless or wire-line network, such as an Intranet of a certain organization, a Wireless Local Area Network (WLAN), a wireless or wire-line telephone network such as a Public Land Mobile Network (PLMN), a Public Switched Telephone Network (PSTN) or a cellular network, or any other suitable type of network over which users conduct communication sessions. Although Fig. 1 shows a single network for the sake of clarity, system 20 may receive and analyze communication traffic from multiple networks.

The term "communication sessions" is used herein to describe various forms of communication interaction of users 28 over network 24. In the example of Fig. 1, users 28 conduct communication sessions with one another or with servers 32. Communication sessions may comprise, for example, a Web browsing session vis-à-vis a certain Web site, an e-mail message, a Peer-to-Peer session, an instant messaging session, a chat session, uploading or downloading of a file to or from a server, a social network session, an interaction with an Internet forum, a phone conversation, a Short Messaging Service (SMS) message, a Multimedia Messaging Service (MMS) message, a fax, or any other suitable type of session.

In the example of Fig. 1, system 20 comprises a network interface 36, a traffic database 40, a session reconstruction processor 42, a session database 44 and a prioritization processor 46. Network interface 36 receives communication traffic from network 24. The traffic may comprise, for example, communication packets such as Internet Protocol (IP) packets, or any other suitable kind of traffic. The received communication traffic is stored in database 40 for analysis.

Reconstruction processor 42 retrieves traffic (e.g., packets) from database 40 and reconstructs communication sessions conducted by users 28. For Web browsing sessions, for example, processor 42 typically reassembles a group of Web pages that were accessed by a user and the interactions between the user and the Web pages. Example methods for reconstructing Web sessions are described in U.S. Patent Application Publication 2011/0238723, cited above. For telephone conversations, processor 42 typically reconstructs the call content (media) of one or both sides of the call, as well as signaling and/or metadata related to the call. Alternatively, processor 42 may reconstruct any other suitable type of session in any suitable way. The reconstructed sessions are stored in session database 44.

Prioritization processor 46 retrieves reconstructed communication sessions from session database 44. Processor 46 automatically assigns respective priorities to the sessions using methods that are described in detail below. Processor 46 typically comprises a queue in which at least some of the sessions (or pointers thereto) are held in accordance with the priorities. The reconstructed sessions are also referred to as products.

The sessions prioritized by processor 46 are presented to operator 48, e.g., an analyst or investigator, on a display 56 of an operator terminal 52. The operator may manipulate the displayed session or otherwise provide input to system 20 using input devices 60, such as a keyboard or mouse.

The system configuration of Fig. 1 is an example configuration, which is shown purely for the sake of conceptual clarity. In alternative embodiments, any other suitable system configuration can also be used. For example, the functions of reconstruction processor 42 and prioritization processor 46 may be partitioned among any desired number of processors, e.g., servers or other computing platforms, or even performed by a single processor. Traffic database 40 and session database 44 may be implemented in any suitable storage device, such as magnetic or solid state storage media.

Typically, processors 42 and 46 comprise general-purpose computers, which are programmed in software to carry out the functions described herein. The software may be downloaded to the computers in electronic form, over a network, for example, or it may, alternatively or additionally, be provided and/or stored on non-transitory tangible media, such as magnetic, optical, or electronic memory.

### AUTOMATIC SESSION PRIORITIZATION TECHNIQUES

In some embodiments, session reconstruction processor 42 or prioritization processor 46 associates each session with the target user who conducts the session, e.g., the individual making the phone call or browsing the Web server. Prioritization processor 46 assigns the priority to a given session depending on the identity of the target user associated with the session.

In an embodiment, a set of prioritization rules is predefined for each target user. Each session is first assigned an initial priority by processor 46, based on the target user identity. In one example embodiment, the initial priorities comprise integer numbers in the range 1-9, with 1 marking the highest priority and 9 marking the lowest priority. Then, processor 46 adjusts the initial priority in accordance with the rules defined for this target user. For example, each rule may cause the priority to be increased or decreased by a certain score (e.g., an integer number in the range 1-9) depending on whether the session meets the rule or not. Processor 46 applies the rules to the session, and adjusts the initial priority accordingly, so as to produce the final priority of the session.

Processor 46 may use any suitable prioritization rules. Typically, the rules are defined over metadata of the session. In some embodiments, however, the rules may be defined over the session content as well. The description that follows gives several examples of possible prioritization rules.

An example rule may assign lower priority to an e-mail message, SMS or other message if the message is considered spam. For most users, spam messages are to be discarded and not allocated analysis resources. One exception may be in the context of an investigation of a target user who is suspected of spam generation. In such a case, the rule may assign high priority to spam messages.

Another example rule assigns lower priority to an e-mail message or other message if the message comprises a virus, a worm, a Trojan horse or other malicious content. In most cases, malicious content is to be discarded. In an investigation of a target user who is suspected of producing or distributing malicious content, however, the rule may assign high priority to messages containing such content.

Another example rule assigns higher or lower priority to a session based on Uniform Resource Locators (URLs) that are accessed during the session. In some embodiments, a set of URL categories is defined in processor 46, e.g., URLs relating to pornography, terrorism, URLs related to a specific country, or any other suitable type of category. In these embodiments, each category is associated with a certain increase or decrease in priority. When evaluating this rule, processor 46 checks the URLs that are accessed during the session, and increases or decreases the session's priority depending on the categories to which the accessed URLs belong.

In some embodiments, processor 46 holds a data structure (e.g., index or dictionary) of categorized URLs for this purpose. The relation between URL categories and priorities may change from one target user to another. In other words, a certain category of URLs may be important for investigating or tracking a certain target user, but unimportant for another target user.

Yet another example rule may increase or decrease the priority depending on the type of session. For example, e-mail messages, SMS messages, MMS messages and faxes of a particular target user can be treated with different priorities. In an example scenario, if a certain target user is known to send important messages primarily using SMS, then SMS messages of that target user can be assigned high priority, and other types of messages can be assigned lower priorities.

In some embodiments, a rule increases or decreases the session priority based on parameters relating to the target user that are not obtained from the session itself but from other sources. Such parameters may relate, for example, to the identity of the target user. For example, the target user may be known to be affiliated with a certain organization that is considered high priority. Additionally or alternatively, the parameters may relate to the way the target user uses certain services or applications.

Another example rule increases or decreases the session priority based on whether the session comprises a certain type of content, e.g., images, videos or data files. Another rule increases or decreases the session priority if a certain type of file (e.g., image file, or password-protected or encrypted file) is attached to the session. Rules of this sort enable the operator to focus, for a certain target user, on specific content types.

Yet another rule increases or decreases the session priority depending on the type of application used for performing the session. Note that this rule may be applied even if the application itself (and thus the session) cannot be de decoded. For example, processor 46 may be able to conclude that a certain session involves a game application, even though it is unable to decode the particular application. This classification may be sufficient for adjusting the session priority. Other classes of applications may comprise, for example, Web-based e-mail applications, P2P applications or file sharing applications.

Some session types, such as phone calls and e-mails, involve more than one user. Another example rule adjusts the priority of a session of a given target user based on the identity of another user involved in the session, if one exists. For example, if the user at the opposite side of the session is also a known target user, the session priority may be increased. If the opposite side of the session is a public user (e.g., directory service) the session priority may be reduced.

The above-described rules are given purely by way of example. In alternative embodiments, prioritization processor 46 may define and apply any other suitable rules. Some rules may be valid within a specified time period, or may depend on the occurrence time of the session in another way. Some rules may depend on keywords found in the session content. Other rules may depend on other metadata of the session, such as communication identifiers found in the session, the protocol used in the session, or any other suitable parameter.

In the examples above, the priority of a session is increased or decreased by a certain amount depending on whether a certain rule is met. This mechanism, however, is described purely by way of example. In alternative embodiments, the session priority can be set or modified in any other suitable way depending on the prioritization rules. For example, the prioritization rules may provide any other suitable indications that are afterwards taken into consideration for adjusting or setting the session priority.

In an embodiment, operator 48 defines the rules for a given target user using a set of predefined templates. The operator may use a template as provided, or modify the parameters of a template to suit a particular target user. For example, the template may specify the score by which each rule increases or decreases the session priority.

In various embodiments, processor 46 may present the prioritized sessions to operator 48 in various ways. In one embodiment, processor 46 arranges the sessions in the queue in decreasing order of priority. In another embodiment, processor 46 adds to the queue only sessions whose priorities are above a certain threshold. Sessions of the same priority are typically ordered according to arrival time, i.e., First In First Out (FIFO).

In some embodiments, when a session is updated with newly arriving traffic, processor 46 re-evaluates the rules defined for the session user and updates the session priority accordingly. In an embodiment, the priority of a session that is already placed in the queue is not updated. Processor 46 typically polls the queue by priority, and presents the sessions to the operator in order of their respective priorities.

In some embodiments, operator 48 may modify (e.g., override) the automatic priorities assigned by processor 46, by providing input via input device 60. The operator input will typically modify the position of certain sessions in the queue. In some embodiments, processor 46 may automatically adjust one or more of the prioritization rules based on the operator input, for example by correlating the operator input with the assigned priorities using an Artificial Intelligence process such as a neural network or decision tree process.

In some embodiments, operator 48 may update the priority rules in processor 46 using operator terminal 52. Typically, session priorities that have been already calculated are not re-calculated following rule updates. In other words, the updated rules are applied only to sessions that are prioritized after the update. In some embodiments the operator may request to re-calculate the prioritization of previously-prioritized sessions.

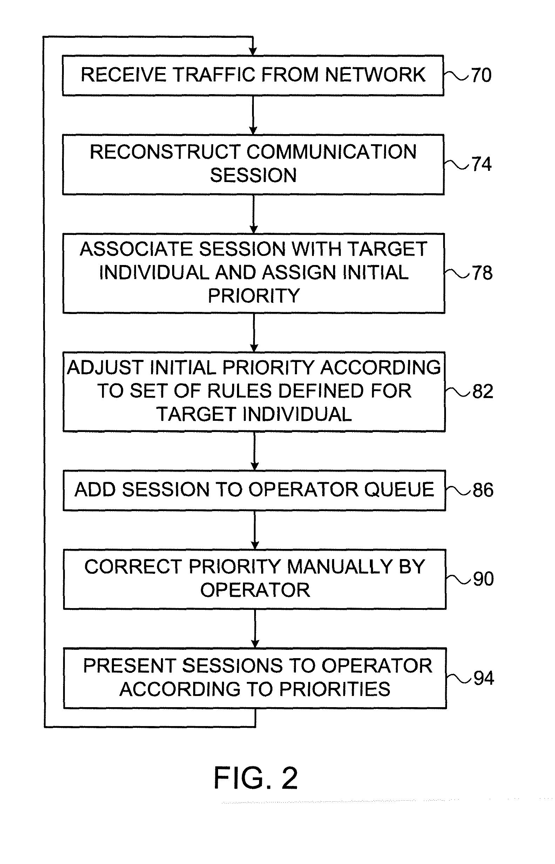

Fig. 2 is a flow chart that schematically illustrates a method for communication analysis, in accordance with an embodiment that is described herein. The method begins with system 20 receiving communication traffic from network 24 via network interface 36, at an input step 70. Session reconstruction processor 42 processes the received traffic so as to reconstruct communication sessions, at a session reconstruction step 74.

Reconstruction processor 42 or prioritization processor 46 associates the session with the target user (e.g., individual) who conducts the session, and prioritization processor 46 assigns an initial priority to the session depending on the target user, at an initial prioritization step 78.

Prioritization processor 46 adjusts the initial priority of the session based on the set of rules defined for the target user conducting the session, at a priority adjustment step 82. Typically, processor 46 applies the set of rules to the session, and increases or decreases the session priority depending on whether each rule is met or violated.

Prioritization processor 46 adds the prioritized message to the queue in accordance with the priority of the session, at a queuing step 86. In some embodiments, processor 46 accepts input from operator 48 and modifies the priority of the session based on the operator input, at a manual adjustment step 90.

Processor 46, using terminal 52, presents the sessions to operator 48 in accordance with the respective priorities, at an output step 94. The method then loops back to step 70 above.

Although the embodiments described herein mainly address communication transactions, the principles of the present disclosure can also be used for any other type of transactional data investigated, for example, by Network Forensics Investigators, Cyber Crime analysis agencies, Law Enforcement Agencies (LEAs) or intelligence agencies. Such transactions may comprise, for example, Internet activities, credit card transactions, bank transfers, airline ticketing transactions, toll-road billings, Customer Relations Management (CRM) systems records, location tracking events, among others.

It will thus be appreciated that the embodiments described above are cited by way of example, and that the present disclosure is not limited to what has been particularly shown and described hereinabove. Rather, the scope of the present disclosure includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A method for communication analysis, comprising:
receiving communication traffic from a communication network;
processing the received communication traffic so as to reconstruct communication sessions conducted by users of the communication network;
automatically assigning respective priorities to the reconstructed communication sessions; and
presenting the communication sessions to an operator in accordance with the priorities.

2. The method according to claim 1, wherein assigning the priorities comprises assigning a priority to a communication session by identifying a target user who conducts the communication session and assigning the priority in accordance with one or more rules defined for the target user.

3. The method according to claim 2, wherein assigning the priority comprises assigning a respective initial priority to the communication session depending on the target user, and adjusting the initial priority in accordance with the one or more rules.

4. The method according to claim 2, wherein assigning the priority comprises setting the priority depending on one or more Uniform Resource Locators (URLs) accessed during the communication session.

5. The method according to claim 2, wherein assigning the priority comprises setting the priority depending on whether the communication session comprises malicious content.

6. The method according to claim 2, wherein assigning the priority comprises setting the priority depending on whether the communication session comprises spam.

7. The method according to claim 2, wherein assigning the priority comprises setting the priority depending on a type of the communication session.

8. The method according to claim 2, wherein assigning the priority comprises setting the priority depending on one or more parameters relating to the target user that are obtained from an external source other than the communication session.

9. The method according to claim 2, wherein assigning the priority comprises setting the priority depending on whether content of a specified type is comprised in the communication session.

10. The method according to claim 2, wherein assigning the priority comprises setting the priority depending on whether a file of a specified type is attached to the communication session.

11. The method according to claim 2, wherein assigning the priority comprises setting the priority depending on a type of application used in the communication session.

12. The method according to claim 2, wherein assigning the priority comprises setting the priority depending on an identity of another user involved in the communication session.

13. The method according to claim 1, wherein processing the received communication traffic comprises associating a communication session with respective metadata, and wherein assigning the priorities comprises setting a priority of the communication session depending on the metadata associated with the communication session.

14. The method according to claim 1, and comprising modifying the priorities in response to input from the operator.

15. The method according to claim 14, wherein modifying the priorities comprises adjusting the priorities by applying an Artificial Intelligence process to the assigned priorities and to the input from the operator.
